# EUROPEAN PATENT SPECIFICATION

(11) **EP 3 488 999 B1**
(45) Date of publication and mention of the grant of the patent: **08.03.2023**
(21) Application number: 17382797.3
(22) Date of filing: 24.11.2017
(51) Int. Cl.: B29C 65/34, B29C 65/36, B29C 65/08, B29L 31/30

(54) **JOINING METHOD FOR THERMOPLASTIC ELEMENTS**
VERBINDUNGSVERFAHREN FÜR THERMOPLASTISCHE ELEMENTE
PROCÉDÉ D'ASSEMBLAGE D'ÉLÉMENTS THERMOPLASTIQUES

(43) Date of publication of application: 29.05.2019
(73) Proprietor: Airbus Operations, S.L., 28906 Getafe Madrid (ES)
(72) Inventor: VÁZQUEZ CASTRO, Jesús Javier, 28906 Getafe (ES); SÁNCHEZ PÉREZ, Melania, 28906 Gestafe (ES); MARTÍN MORENO, Zulima, 28906 Getafe (ES); BUTRAGUEÑO MARTÍNEZ, Asunción, 28906 Getafe (ES)
(74) Representative: Elzaburu S.L.P.

(56) References cited:
- WO-A1-02/17687
- CN-A- 106 881 871
- DE-U1-202014 003 776
- US-A1- 2012 279 647

## Description

### Field of the invention

The invention is related to a welding method for joining two thermoplastic elements, specially adapted for the aircraft industry.

### Background of the invention

Manufacturing and joining by welding thermoplastic parts is known in the state of the art. One of the main advantages offered by a method of joining thermoplastic elements by a welding process is the possibility to join parts without the need of rivets or fasteners.

However, nowadays there is no industrialized welding processes for complex or thick structural aeronautical joints that assure a uniform welded interface without impact in the mechanical properties of the interface.

There are several heating technologies for thermoplastic welding (induction, resistive, ultrasonic, friction...) but all of them have constraints for aeronautical structural applications in which resins as polyetherketoneketone (PEKK), polyether ether ketone (PEEK) etc, are needed. It must be assured a homogenous and focused heating in the interface as well as good mechanical properties that known processes as spot welding does not achieved.

For continuous joints, ultrasonic welding have limitations in its application (thickness...), induction/resistive welding normally needs metallic inserts embedded in the interface. Also friction stir welding has big impact in interface mechanical properties.

It is known document WO02/17687 disclosing a semi-rigid heated element assembly and method of manufacturing the semi-rigid heated element assemblies. A heated element assembly includes a first thermoplastic sheet, a second thermoplastic sheet, and a resistance heating element laminated between the first and second thermoplastic sheets. The resistance heating element includes a supporting substrate having a first surface thereon and an electrical resistance heating material forming a predetermined circuit path having a pair of terminal end portions. The circuit path continues onto at least one flap portion that is capable of rotating about a first axis of rotation. The reformable continuous element structure may be formed into a final element assembly configuration whereby at least the flap portion is rotated along its axis of rotation to provide resistance heating in at least two planes.

It is also known document DE202014003776 disclosing a plastic pipe having a base body, a first end and a second end, said first end being formed to engage with a second end of a like plastic pipe to be joined together. Wherein at the first end a first coupling region with first positive locking elements and at the second end a second coupling region with the first positive locking elements corresponding second positive locking elements (24) is formed. The first coupling region at least one heating element is arranged in an assembled state of two plastic pipes at least partially by the second coupling portion of the plastic pipe is covered.

It is also known document US2012/279647 disclosing a method that glues a heat-activated glueable surface element to an adhesive substrate which does not conduct electric current, whereby a surface thereof has only a low thermal conductivity. The heat-activated glueable surface element has an electrically conductive layer in addition to a heat-activated adhesive mass. The layer is inductively heated for a short time in an alternating magnetic field at a frequency from a middle frequency range. A high pressure of at least 1 MPa is exerted on the gluing surface simultaneously to the inductive heating, whereby preventing thermal decomposition reactions is possible. Further, a device performs the method and has an induction heater integrated in a press tool.

It is also known document CN106881871 disclosing a method for realizing controllable positioning surface welding of plastics. The method is used for welding vacuum thermal isolation plates and welding thermoplastic high molecular materials in any shapes. The method comprises the following steps of: step A, uniformly mixing a microwave absorbing medium with a polymer solution to obtain homogeneous-phase mixed liquid (solder); step B, coating a high molecular material surface to be welded with the homogeneous-phase mixed liquid obtained in the step A according to a shape which needs to be formed by welding, wherein coating thickness is 10 micrometers-500 micrometers; and step C, after covering the high molecular material body coated with the homogeneous-phase mixed liquid obtained in the step B with another high molecular material body, or fixing the welding surface through a welding auxiliary cabinet, placing the high molecular material bodies together in microwave welding equipment, setting corresponding microwave power and microwave action time according to different melting temperatures of the high molecular materials to be welded, performing microwave welding, and performing hot pressing for 30s to complete welding, wherein the hot pressing displacement is 0-4mm.

### Summary of the invention

The claimed method object of the invention comprises the steps of the appended claim 1.

Therefore, the claimed invention proposes to use a graphene layer located at the interface of the two thermoplastic parts to be joined as a heater that will melt the thermoplastic resin of the adjacent areas of the two parts. The graphene layer is integrated in the structure during the welding process, heating directly the thermoplastic surfaces to be welded.

The objective of the invention is to provide a feasible welding process for structural thermoplastic having the following advantages:
- reducing the assembly time of the joining,
- providing a method that is easy to perform at shop floor level,
- reducing the number of parts and therefore achieving a part count reduction and subsequent assembly process, by the integration of at least two parts into one only piece,
- enabling a thermoplastic technology that has advantages in different fields as environmental, recyclability,
- enable reparability, tipically repairs in thermoplastic are quite difficult but with the invention reparability is feasible,
- drag reduction at the aerodynamic surface due to the absence of fastener heads.

The claimed process will be applicable for any part made with thermoplastic resins.

According to the above mentioned, the claimed invention proposes to use a heating source based on a graphene layer located at the interface of the two thermoplastic parts to be joined. Heating the graphene layer will melt the thermoplastic resin of the adjacent areas of the two thermoplastic parts to be joined.

One of the advantages of using a graphene layer its flexibility, i.e., it can be easily bent, and hence the layer is able to be adapted to any planar or non planar geometry of the two parts to be joined.

Additionally, the thermal properties of graphene layers allow its use as adequate heating source because by applying a small power, the temperature of graphene sheets, and hence the temperature of the substrate where the graphene sheet is located, can be increased in a few seconds.

Temperature and heating time to achieve a requested temperature will depend on the graphene sheet pattern, its size and on the power supplied.

### Description of the figures

To complete the description and in order to provide for a better understanding of the invention, a set of drawings is provided. Said drawings form an integral part of the description and illustrate preferred embodiments of the invention. The drawings comprise the following figures.
Figure 1 shows a schematic view of a graphene heater attached to the front side of a composite panel.
Figures 2A and 2B show two embodiments of a graphene pattern.

### Detailed description of the invention

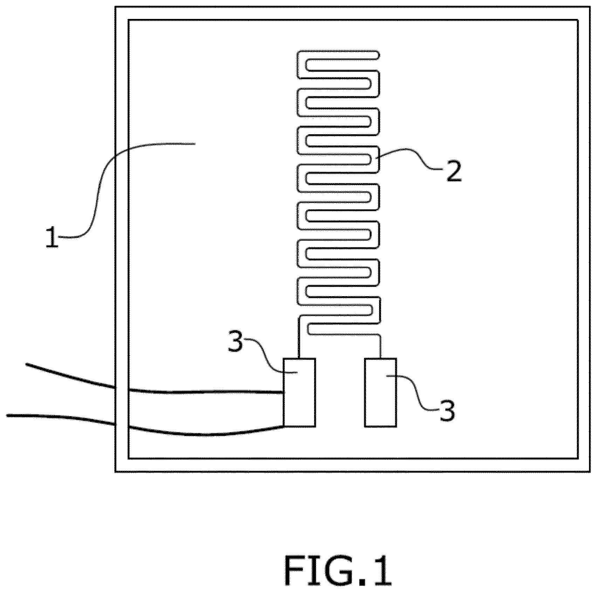

Figure 1 shows a schematic view of a graphene layer (2) attached to the front side of a composite thermoplastic part (1).

The graphene layer (2) comprises a continuous strand of graphene following an undulated pattern and ending in two connections (3) to an electric current. Additionally, the graphene layer (2) can be embedded in thermoplastic resin to be joined to the composite panel, therefore it can be preimpregnated with resin.

Graphene could be manufactured with a required pattern, over a thermoplastic film compatible with the resin of the parts to be joined. So there won't be any "estrange" material at the interface but the graphene layer (2). The thickness of the integrated graphene layer (2) is around 50 microns, hence, with no impact in the component tolerances. Available thickness of the graphene layer (2) is between 20 microns and 80 microns.

Graphene pattern, length, current voltage and intensity can be fine tuned to achieve the required thermal field around the interface to be joined. Important parameters of this process are:
1. To control the temperature of the graphene layer (2) in order to heat the interface area of both thermoplastic parts but not the complete thickness of said parts.
2. To control the voltage/amperage/time to fine tune the process.
3. To generate the optimal graphene pattern (foil/net/figure) to melt the whole interface surface in a homogenous way and avoid the appearance of weak points due to overheating.

The pattern is one of the parameters that must be determined for each area to be joined, with the objective that all the thermoplastic resin of said area reaches at least the fusion temperature as uniformly as possible. Therefore, the shape of the pattern can vary as long as it fulfills the objective that the whole area to be joined reaches the required temperature.

Additionally, the method object of the invention may further comprises the step of raising the temperature of the two adjacent thermoplastic (1) surfaces above the thermoplastic resin consolidation temperature. The consolidation temperature would be equal or above the melt temperature.

Even the method may further comprises the step of applying pressure to the two thermoplastic parts (1) against each other. The applied pressure would be the minimum pressure to achieve an intimate contact between both surfaces to be joined, ideally, if the contact of both surfaces would be perfect in all their contact area, pressure would be not needed.

The consolidation process hence comprises applying pressure at the consolidation temperature so that the material flows in order to achieve intermolecular diffusion of the material and therefore their join.

If the temperature is raised above thermoplastic resin consolidation temperature, for instance, 300 ºC - 345 ºC, for a certain period of time with applied pressure, resin of both parts will then remain linked.

The pattern can be a coil type, like in the attached figures, or straight lines, etc., to define which would be the most optimal design depending on the geometry of the components to be joined.

The graphene layer (2) should be designed with a special configuration depending on the geometry of the thermoplastic parts and heating system (resistive, induction or ultrasonic heating) to distribute heating in a homogenous way around the interface.

Also it is possible to manage the welding strategy, varying from a continuous welding all along the parts surfaces in contact to a discrete welding to avoid any possible propagation of a crack at the welding area.

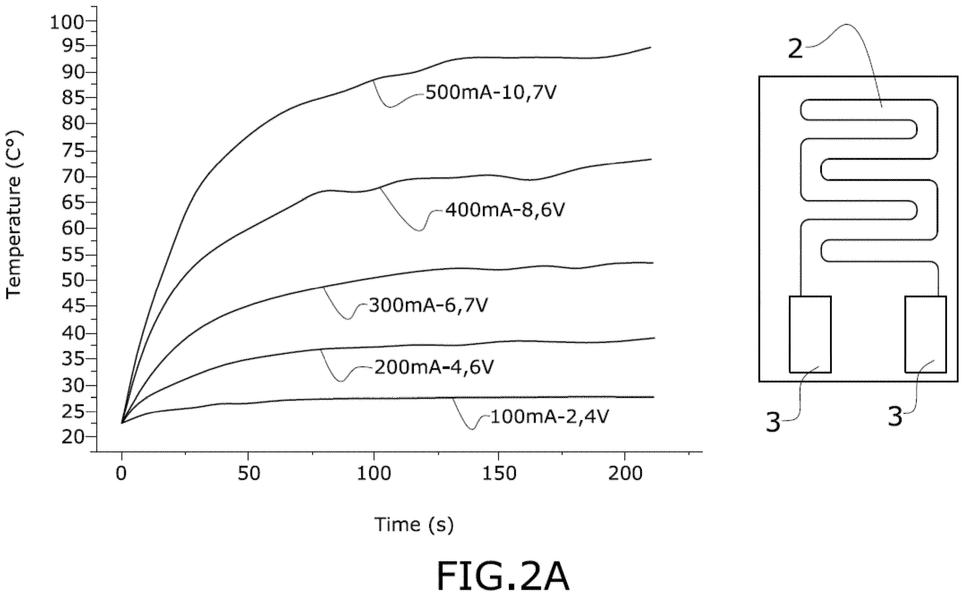

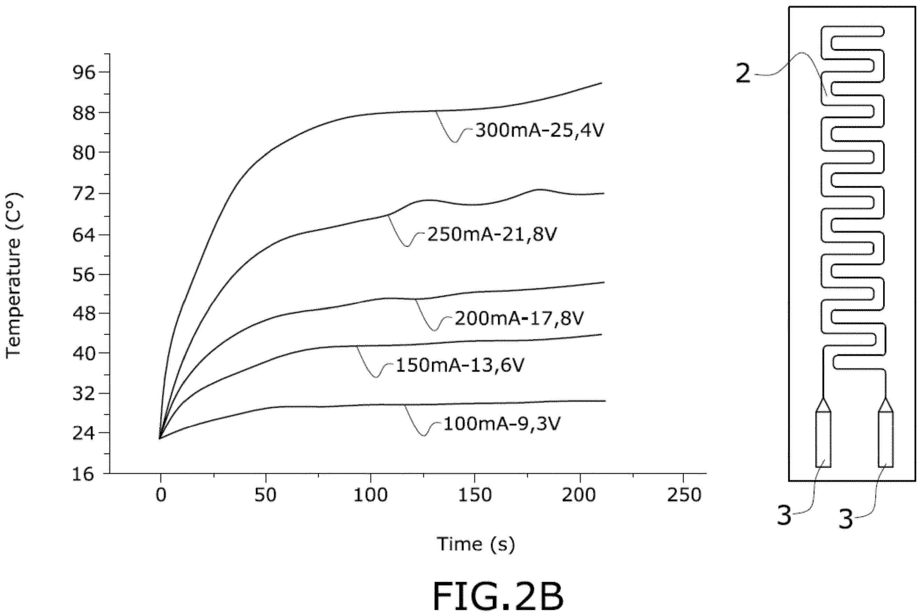

Figure 2A discloses a graphene layer (2) of 40 mm × 60 mm, to which 300 mA is applied and is heated up to 52.5 ºC for two minutes. Figure 2B discloses a graphene layer (2) of 26 mm × 160 mm, to which 25.4V/300 mA is applied and is heated up to 89°C for two minutes.

## Claims

1. Joining method for thermoplastic elements comprising the following steps:
- providing two thermoplastic parts (1) having two surfaces to be joined,
- locating a graphene layer (2) between the two thermoplastic parts (1) adjacent to the surfaces to be joined, the graphene layer (2) being preimpregnated with resin,
- heating the graphene layer (2) such that the graphene layer (2) melts the thermoplastic resin of the adjacent surfaces of the two thermoplastic parts (1) that are joined,
**characterised in that** the graphene layer (2) comprises a continuous strand of graphene and two connections (3) connected to the ends of the strand and configured to be connected to the electric current.

2. Joining method, according to claim 1, wherein the graphene layer (2) is located on a thermoplastic film.

3. Joining method, according to any preceding claim, wherein it further comprises the step of raising the temperature of the two adjacent thermoplastic surfaces above the thermoplastic resin consolidation temperature which is equal or above the melt temperature.

4. Joining method, according to claim 3, wherein it further comprises the step of applying pressure to the two thermoplastic parts (1) against each other.

5. Joining method, according to any preceding claim, wherein the thickness of the graphene layer (2) is between 20 microns and 80 microns.

6. Joining method, according to claim 5, wherein the thickness of the graphene layer (2) is 50 microns.

## Patentansprüche

1. Verbindungsverfahren für thermoplastische Elemente, das die folgenden Schritte umfasst:
- Bereitstellen von zwei thermoplastischen Teilen (1) mit zwei zu verbindenden Oberflächen,
- Anordnen einer Graphenschicht (2) zwischen den beiden thermoplastischen Teilen (1) in Nachbarschaft zu den zu verbindenden Oberflächen, wobei die Graphenschicht (2) mit Harz vorimprägniert ist,
- Erhitzen der Graphenschicht (2) derart, dass die Graphenschicht (2) das thermoplastische Harz der benachbarten Oberflächen der beiden thermoplastischen Teile (1), die verbunden werden, zum Schmelzen bringt,
**dadurch gekennzeichnet, dass** die Graphenschicht (2) einen kontinuierlichen Strang von Graphen und zwei Verbindungen (3), die mit den Enden des Strangs verbunden sind und zum Verbinden mit dem elektrischen Strom ausgelegt sind, umfasst.

2. Verbindungsverfahren nach Anspruch 1, wobei sich die Graphenschicht (2) auf einer thermoplastischen Folie befindet.

3. Verbindungsverfahren nach einem der vorhergehenden Ansprüche, wobei es ferner den Schritt des Erhöhens der Temperatur der beiden benachbarten thermoplastischen Oberflächen über die der Schmelztemperatur entsprechenden oder darüber liegenden Konsolidierungstemperatur des thermoplastischen Harzes hinaus umfasst.

4. Verbindungsverfahren nach Anspruch 3, wobei es ferner den Schritt des Anwendens von Druck auf die beiden thermoplastischen Teile (1) gegeneinander umfasst.

5. Verbindungsverfahren nach einem der vorhergehenden Ansprüche, wobei die Dicke der Graphenschicht (2) zwischen 20 Mikron und 80 Mikron liegt.

6. Verbindungsverfahren nach Anspruch 5, wobei die Dicke der Graphenschicht (2) 50 Mikron beträgt.

## Revendications

1. Procédé de jointure pour des éléments thermoplastiques comprenant les étapes suivantes :
- mise à disposition de deux pièces thermoplastiques (1) possédant deux surfaces à joindre,
- positionnement d'une couche de graphène (2) entre les deux pièces thermoplastiques (1) de manière adjacente aux surfaces à joindre, la couche de graphène (2) étant préimprégnée avec une résine,
- chauffage de la couche de graphène (2) de sorte que la couche de graphène (2) fonde la résine thermoplastique des surfaces adjacentes des deux pièces thermoplastiques (1) qui sont jointes,
**caractérisé en ce que** la couche de graphène (2) comprend une bande continue de graphène et deux connexions (3) connectées aux extrémités de la bande et configurées pour être connectées au courant électrique.

2. Procédé de jointure, selon la revendication 1, la couche de graphène (2) étant située sur un film thermoplastique.

3. Procédé de jointure, selon une quelconque revendication précédente, qui comprend en outre l'étape d'élévation de la température des deux surfaces thermoplastiques adjacentes au-dessus de la température de consolidation de la résine thermoplastique qui est égale ou supérieure à la température de fusion.

4. Procédé de jointure, selon la revendication 3, qui comprend en outre l'étape d'application de pression sur les deux pièces thermoplastiques (1) l'une contre l'autre.

5. Procédé de jointure, selon une quelconque revendication précédente, l'épaisseur de la couche de graphène (2) étant comprise entre 20 microns et 80 microns.

6. Procédé de jointure, selon la revendication 5, l'épaisseur de la couche de graphène (2) étant de 50 microns.
